# EUROPÄISCHE PATENTANMELDUNG

(11) **EP 1 338 475 A2**
(43) Veröffentlichungstag der Anmeldung: **27.08.2003**
(21) Anmeldenummer: 02027750.5
(22) Anmeldetag: 11.12.2002
(51) Int. Cl.: B60R 13/02, B05D 7/06, B32B 21/12

(54) **Verfahren zum Herstellen eines Innenausbauteiles für Fahrzeuge sowie danach hergestelltes Innenausbauteil**

(30) Priorität: 25.02.2002 DE 10209014
(71) Anmelder: Erwin Behr Automotive GmbH, 73240 Wendlingen (DE)
(72) Erfinder: Ehrath, Martin, 73033 Göppingen (DE); Höring, Christian, 73230 Kirchheim unter Teck (DE)
(74) Vertreter: Hoeger, Stellrecht & Partner

(57) **Zusammenfassung**

Die Erfindung betrifft ein Verfahren zur Herstellung eines Innenausbauteiles (10) für Fahrzeuge, wobei das Innenausbauteil (10) sichtseitig ein Holzformteil (12) aufweist, das mit einer Beschichtung (20) versehen wird. Um dem Innenausbauteil (10) einen naturnahen Eindruck zu verleihen, wird erfindungsgemäß vorgeschlagen, daß man auf das Holzformteil (12) ein Beschichtungsmaterial auf Basis von pflanzenölmodifizierten Harzen und natürlichen pflanzlichen Ölen aufträgt, wobei man dem Beschichtungsmaterial keramische Mikropartikel zusetzt. Außerdem wird ein vorzugsweise nach diesem Verfahren hergestelltes Innenausbauteil (10) vorgeschlagen.

## Beschreibung

Die Erfindung betrifft ein Verfahren zur Herstellung eines Innenausbauteiles für Fahrzeuge, wobei das Innenausbauteil sichtseitig ein Holzformteil aufweist, das mit einer Beschichtung versehen wird.

Außerdem betrifft die Erfindung ein Innenausbauteil für Fahrzeuge mit einem sichtseitig beschichteten Holzformteil.

Innenausbauteile kommen als Zierteile in zunehmendem Umfang zur Ausgestaltung von Innenräumen von Fahrzeugen, insbesondere von Personenkraftfahrzeugen, zum Einsatz. Sie dienen der Dekoration und werden vorwiegend im Bereich des Armaturenbrettes und der Fahrzeugtüren angebracht. Sichtseitig umfassen die Innenausbauteile ein Holzformteil, beispielsweise ein Holzfurnier oder auch ein Massivholz, und rückseitig sind sie meistens mit einer Trägerschicht ausgestattet, die dem Holzformteil die erforderliche mechanische Stabilität verleiht und die die Verankerung des Innenausbauteiles im Innenraum des Fahrzeuges ermöglicht.

Üblicherweise sind die Holzformteile mit einer hochglänzenden Lackbeschichtung versehen. Hierzu wird auf die Sichtseite des Holzformteiles häufig durch Sprühen oder Spritzen ein Lack aufgebracht. Dabei sind im allgemeinen mehrere Lagen erforderlich, um die erwünschte Versiegelung des Holzformteiles und auch eine möglichst glänzende Oberfläche zu erzielen. Die Lacke basieren üblicherweise auf Polyester oder Polyurethan. Sie verleihen dem Innenausbauteil eine deutlich sichtbare Beschichtung, die zwar den Vorteil hat, daß sie die Maserung des Holzformteiles hervorhebt und eine optisch ansprechende "Tiefenwirkung" bewirkt. Derartige Lackbeschichtungen haben aber den Nachteil, daß sie die Haptik des Holzformteiles stark verfremden und dem Holzformteil einen naturfernen Eindruck vermitteln.

Aufgabe der vorliegenden Erfindung ist es, ein Verfahren zur Herstellung eines gattungsgemäßen Innenausbauteiles sowie ein entsprechend hergestelltes Innenausbauteil bereitzustellen, das einen möglichst naturnahen Eindruck vermittelt.

Diese Aufgabe wird bei einem Verfahren der eingangs genannten Art erfindungsgemäß dadurch gelöst, daß man auf das Holzformteil ein Beschichtungsmaterial auf Basis von pflanzenölmodifizierten Harzen und natürlichen pflanzlichen Ölen aufträgt, wobei man dem Beschichtungsmaterial keramische Mikropartikel zusetzt.

Das Beschichtungsmaterial kann beim Auftagen beispielsweise eine wachsartige oder flüssige Konsistenz aufweisen und dringt in die Oberfläche des Holzformteiles ein.

In Abkehr von den üblichen Beschichtungen für Innenausbauteile wird beim erfindungsgemäßen Verfahren kein Lack verwendet, der die natürliche Optik und Haptik des Holzformteiles verfremdet oder eine Deckschicht bildet, sondern es kommt ein Beschichtungsmaterial zum Einsatz, das in das Holzformteil eindringt und ein polymeres Netzwerk mit guten Beständigkeitseigenschaften ausbildet, wobei die natürliche Oberfläche des Holzformteiles praktisch vollständig erhalten bleibt. Das Holzformteil vermittelt demzufolge sowohl in seiner Optik als auch in seiner Haptik den natürlichen Holzeindruck und erhält somit eine besondere Wertigkeit. Das Innenausbauteil genügt aber dennoch den hohen Anforderungen, die an Kraftfahrzeuginnenausbauteile gestellt werden, insbesondere zeigt es eine hohe Kratzfestigkeit und Härte. Das erfindungsgemäße Innenausbauteil hat außerdem den Vorteil, daß es bei einer Beschädigung kostengünstig repariert werden kann, denn hierzu ist es lediglich erforderlich, das Beschichtungsmaterial erneut auf das Holzformteil aufzutragen, ohne daß das Innenausbauteil aus dem Fahrzeug ausgebaut werden muß.

Die erfindungsgemäß zum Einsatz kommende Beschichtung ist biologisch abbaubar, so daß das Innenausbauteil problemlos entsorgt werden kann. Der Einsatz pflanzenölmodifizierter Harze und natürlicher pflanzlicher Öle ermöglicht es, lediglich geruchsmilde Lösungsmittel für das Beschichtungsmaterial heranzuziehen, insbesondere können der Einsatz von gesundheitsschädlichem und geruchsintensivem Styrol, Toluol, Benzolen oder ähnliches ebenso entfallen wie sensibilisierende Isocyanate und geruchsintensive Lösungsmittel.

Es hat sich außerdem gezeigt, daß die Beschichtung des Holzformteiles kostengünstig durchgeführt werden kann, da erheblich weniger Beschichtungsmaterial und weniger Arbeitsschritte erforderlich sind als dies beim Lackieren mit Polyester- oder Polyurethanlacken der Fall ist.

Von besonderem Vorteil ist es, wenn man das Beschichtungsmaterial in mehreren Lagen aufträgt, wobei man in einem ersten Auftragsschritt das Beschichtungsmaterial als Grundierung ohne Zusatz von keramischen Mikropartikeln aufträgt und wobei man zumindest in einem abschließenden Auftragschritt das Beschichtungsmaterial unter Zusatz keramischer Mikropartikel aufträgt. Im ersten Auftragschritt übernimmt das Beschichtungsmaterial die Funktion eines Grundieröles oder Einlaßgrundes, der tief in das Holzformteil eindringt, den Holzuntergrund benetzt und für einen optimalen Verbund, d. h. eine gute Verankerung und Haftfestigkeit sorgt. Zumindest in einem abschließenden Auftragschritt werden dem Beschichtungsmaterial abriebverbessernde keramische Mikropartikel zugefügt. Der abschließende Auftragschritt dient der Erzielung einer Deck- oder Leistungsschicht, wobei das Beschichtungsmaterial unter Zusatz der keramischen Mikropartikel ein Überzugsmaterial bildet, das dem Innenausbauteil die geforderten Gebrauchseigenschaften verleiht. Der Zusatz der abriebverbesserten keramischen Mikropartikel gewährleistet die erforderliche Härte, Kratz- und Abriebfestigkeit der Beschichtung.

Bei einer bevorzugten Ausführungsform des erfindungsgemäßen Verfahrens ist vorgesehen, daß man nach dem ersten Auftragschritt das aufgetragene Beschichtungsmaterial trocknet und anschließend in einem zweiten Auftragschritt das Beschichtungsmaterial als weitere Grundierung erneut ohne Zusatz keramischer Mikropartikel aufträgt und wiederum trocknet. Dadurch kann eine besonders gute Haftfestigkeit der Beschichtung erzielt werden.

Günstig ist es, wenn man das Holzformteil nach dem ersten Auftragschritt anschleift. Durch das Anschleifen kann ein besonders guter Verbund des Gesamtaufbaus der Beschichtung sichergestellt werden.

Das aufgetragene Beschichtungsmaterial wird vorzugsweise unter Sauerstoffzufuhr, beispielsweise unter Luftzufuhr, getrocknet. Dadurch wird die nach der Applikation des Beschichtungsmaterials stattfindende oxidative Härtung unterstützt. Bei dieser Härtung reagieren die in den ungesättigten Fettsäuren der trockenen Öle des Beschichtungsmaterials enthaltenen Doppelbindungen intermolekular miteinander und bilden ein polymeres Netzwerk mit guten Beständigkeitseigenschaften.

Vorzugsweise trocknet man das aufgetragene Beschichtungsmaterial bei Raumtemperatur. Es hat sich gezeigt, daß ein derartiger Trocknungsvorgang der Beschichtung des Holzformteiles eine besonders gute Stabilität verleiht.

Das Beschichtungsmaterial kann beispielsweise leinöl- und/oder sojaölmodifizierte Harze umfassen.

Als natürliche pflanzliche Öle können für das Beschichtungsmaterial beispielsweise Leinöle und/oder Sojaöle zum Einsatz kommen.

Zur Applikation des Beschichtungsmaterials kommt ein Verdünnungsmittel, vorzugsweise flüchtige aliphatische Kohlenwasserstoffe, beispielsweise aromatenfreies Testbenzin und Isoparaffine, zum Einsatz. Derartige Verdünnungsmittel sind sehr geruchsschwach und gewährleisten, daß das Innenausbauteil im Endzustand praktisch keine Fremdgerüche aufweist.

Günstig ist es, wenn dem Beschichtungsmaterial ein bleifreies Trocknungsmittel zugesetzt ist, da dadurch der Trocknungsvorgang beschleunigt werden kann.

Um die Vernetzungsreaktion der Fettsäuren des Beschichtungsmaterials zu beschleunigen, ist es von Vorteil, wenn das Beschichtungsmaterial als Trocknungsmittel Zirkonium- und/oder Kobaltverbindungen aufweist, da diese als Katalysatoren für die Vernetzungsreaktion wirken.

Die erfindungsgemäß zum Einsatz kommenden keramischen Mikropartikel werden dem Beschichtungsmaterial vorzugsweise in Pulverform zugesetzt. Hierbei können als keramische Mikropartikel Porzellanpulver oder porzellanähnliche Pulver zum Einsatz kommen.

Bei einer bevorzugten Ausführungsform des erfindungsgemäßen Verfahrens ist vorgesehen, daß man das Beschichtungsmaterial in einer Gesamtmenge von maximal etwa 150 g/m² aufträgt. Es hat sich gezeigt, daß eine derartige Menge an Beschichtungsmaterial ausreicht, um dem Holzformteil die für den Einsatz im Innenraum eines Fahrzeuges erforderlichen Eigenschaften wie zum Beispiel Kratzfestigkeit und Lichtresistenz zu verleihen, wobei jedoch sichergestellt ist, daß keine Verfremdung des "Holzeindruckes" erfolgt, d. h. sowohl in Bezug auf die Optik als auch in Bezug auf die Haptik bleibt der natürliche Eindruck des Holzes erhalten.

Günstig ist es, wenn man in einem ersten Auftragschritt das Beschichtungsmaterial in einer Menge von maximal etwa 40 g/m², vorzugsweise ca. 20 g/m² bis etwa 40 g/m² aufträgt. Besonders günstig hat es sich erwiesen, wenn man das Beschichtungsmaterial im ersten Auftragschritt in einer Menge von ca. 25 g/m² bis etwa 35 g/m² aufträgt.

Der abschließende Auftragschritt erfolgt vorzugsweise mit einer Menge an Beschichtungsmaterial einschließlich zugesetzten keramischen Mikropartikel von maximal etwa 20 g/m², vorzugsweise ca. 10 g/m² bis etwa 15 g/m².

Günstig ist es, wenn der zweite Auftragschritt mit einer Beschichtungsmaterialmenge von maximal etwa 35 g/m², vorzugsweise ca. 15 g/m² bis etwa 35 g/m² erfolgt, wobei sich eine Menge von etwa 20 g/m² bis ca. 30 g/m² als besonders günstig erwiesen hat, um der Beschichtung eine besonders hohe Härte sowie Kratz- und Abriebfes-tigkeit zu verleihen.

Das Auftragen des Beschichtungsmaterials auf das Holzformteil kann zumindest in einem Auftragschritt durch Spritzauftrag erfolgen.

Alternativ und/oder ergänzend kann vorgesehen sein, daß man das Beschichtungsmaterial zumindest in einem Auftragschritt mittels einer Walze oder Bürste auf das Holzformteil aufträgt.

Als besonders vorteilhaft hat es sich erwiesen, wenn man das Beschichtungsmaterial im ersten Auftragschritt mittels einer Walze oder Bürste aufträgt und in den nachfolgenden Auftragschritten auf das Holzformteil aufspritzt.

Wie eingangs erwähnt, erstreckt sich die Erfindung auch auf ein Innenausbauteil für Fahrzeuge, das ein sichtseitig beschichtetes Holzformteil aufweist, wobei das Innenausbauteil vorzugsweise nach dem voranstehend genannten Verfahren hergestellt ist. Um sicherzustellen, daß das Innenausbauteil einen naturnahen Eindruck vermittelt, ist erfindungsgemäß vorgesehen, daß auf das Holzformteil ein Beschichtungsmaterial auf Basis von pflanzenölmodifizierten Harzen und natürlichen pflanzlichen Ölen aufgetragen ist, wobei dem Beschichtungsmaterial keramische Mikropartikel zugesetzt sind.

Wie voranstehend erläutert, hat ein derartiges Innenausbauteil den Vorteil, daß es sowohl in optischer Hinsicht als auch mit Blick auf seine Haptik den Eindruck von natürlichem Holz verleiht, wobei es im Falle einer Beschädigung jederzeit kostengünstig ausgebessert werden kann, indem das Beschichtungsmaterial erneut aufgetragen wird. Außerdem ist das Innenausbauteil äußerst emissionsarm, es weißt insbesondere kein gesundheitsschädliches und geruchsintensives Styrol auf.

Als keramische Mikropartikel sind dem Beschichtungsmaterial vorzugsweise Porzellanpulver oder porzellanähnliche Pulver zugesetzt, die dem Innenausbauteil eine besonders hohe Kratzfestigkeit verleihen.

Vorzugsweise weist das Innenausbauteil rückseitig eine Trägerschicht auf, an der das Holzformteil gehalten ist und das Verankerungselemente umfaßt zur Fixierung des Innenausbauteiles im Innenraum eines Fahrzeuges.

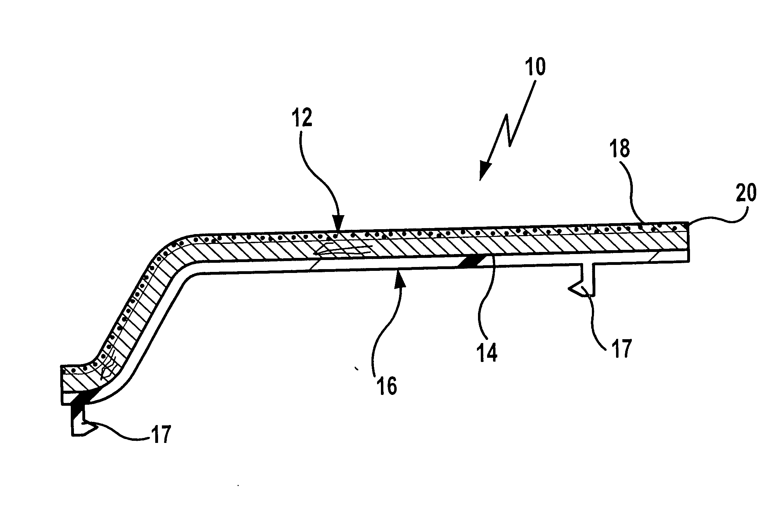

Die nachfolgende Beschreibung einer bevorzugten Ausführungsform der Erfindung dient im Zusammenhang mit der Zeichnung der näheren Erläuterung.

In der Zeichnung ist ein insgesamt mit dem Bezugszeichen 10 belegtes Innenausbauteil in Form eines Zierteils dargestellt zur Verwendung im Innenraum eines Fahrzeuges. Das Zierteil 10 weist auf seiner Sichtseite ein Holzformteil in Form eines Holzfurnieres 12 auf, das mit seiner Rückseite 14 auf einer Trägerschicht 16 flächig aufliegt und auf der Trägerschicht 16 fixiert ist. Die Trägerschicht 16 ist als Kunststofformteil ausgestaltet und bildet Rastelemente 17, mit deren Hilfe das Zierteil 10 im Innenraum eines Fahrzeuges, beispielsweise im Bereich des Armaturenbrettes oder der Fahrzeugtüren, festgelegt werden kann.

Das Holzfurnier 12 ist auf seiner der Rückseite 14 abgewandten Sichtseite 18 mit einer in der Zeichnung schematisch dargestellten Beschichtung 20 versehen, die dem Zierteil 10 die zur Ausgestaltung des Innenraumes eines Fahrzeuges, insbesondere eines Personenkraftfahrzeuges, erforderlich Härte, Kratz- und Abriebfestigkeit verleiht.

Zur Erzielung der Beschichtung 20 wird das auf der Trägerschicht 16 festgelegte Holzfurnier in einem ersten Auftragschritt mit einer Grundierung versehen. Hierzu wird auf die Sichtseite 18 ein Beschichtungsmaterial aufgetragen, das in das Holzfurnier 12 eindringt. Das Beschichtungsmaterial stellt hierbei eine Kombination dar von pflanzenölmodifizierten Harzen, beispielsweise leinöl- oder sojaölmodifizierten Harzen, natürlichen pflanzlichen Ölen, beispielsweise Leinöl oder Sojaöl, bleifreien Trockenstoffen (Sikkative), Verdünnungsmittel, beispielsweise flüchtige aliphatische Kohlenwasserstoffe, vorzugsweise aromatenfreies Benzin und Isoparaffine, sowie Zirkonium- und Kobaltverbindungen als Katalysatoren zur Beschleunigung der Vernetzungsreaktion der ungesättigten Fettsäuren des Beschichtungsmaterials.

Im ersten Auftragschritt wird das Beschichtungsmaterial als Grundierung auf das Holzfurnier 12 aufgespritzt in einer Menge von ca. 25 bis etwa 35 g/m². Anschließend wird das Zierteil 10 einem Trocknungsvorgang bei Raumtemperatur unterworfen, die Trocknung dauert vorzugsweise etwa 16 Stunden.

Alternativ zum Spritzauftrag kann die erste Grundierung auch durch Walzenauftrag erfolgen. Hierbei ist es günstig, wenn das aufgetragene Beschichtungsmaterial in das Holzfurnier eingerieben wird, und hierzu kann ein Bürstenaggregat zum Einsatz kommen.

Nach erfolgter Trocknung, die unter Sauerstoffzufuhr durchgeführt wird, wird die Sichtseite 18 des Holzfurnieres 12 geschliffen, um anschließend in einem zweiten Auftragschritt erneut das Beschichtungsmaterial, diesmal in einer Menge von etwa 20 bis 30 g/m², aufzuspritzen. Anschließend wird das Zierteil erneut einer Trocknung unter Sauerstoffzufuhr unterworfen.

In einem dritten und abschließenden Auftragschritt wird das Beschichtungsmaterial unter Zusatz abriebverbessernder keramischer Mikropartikel, beispielsweise unter Zusatz von Porzellanpulver oder porzellanähnlichem Pulver, auf das Holzfurnier 12 aufgespritzt und nochmals einer Trocknung unter Luftzufuhr unterworfen.

Alternativ kann zur Erzielung einer besonders hohen Kratz- und Abriebfestigkeit vorgesehen sein, daß bereits beim zweiten Auftragschritt dem Beschichtungsmaterial die abriebverbessernden keramischen Mikropartikel zugesetzt werden.

Nach der dem abschließenden Auftragschritt folgenden Trocknung ist eine weitere Bearbeitung des Holzfurnieres 12 nicht mehr erforderlich, das Zierteil kann vielmehr ohne weitere Bearbeitung einer Endkontrolle unterworfen werden. Das Zierteil kann dann im Innenraum eines Fahrzeuges befestigt werden, beispielsweise im Bereich des Armaturenbretts und/oder der Fahrzeugtüren und/oder auch als Kofferraumauskleidung.

## Patentansprüche

1. Verfahren zur Herstellung eines Innenausbauteiles für Fahrzeuge, wobei das Innenausbauteil sichtseitig ein Holzformteil aufweist, das mit einer Beschichtung versehen wird, **dadurch gekennzeichnet, daß** man auf das Holzformteil ein Beschichtungsmaterial auf Basis von pflanzenölmodifizierten Harzen und natürlichen pflanzlichen Ölen aufträgt, wobei man dem Beschichtungsmaterial keramische Mikropartikel zusetzt.

2. Verfahren nach Anspruch 1, **dadurch gekennzeichnet, daß** man das Beschichtungsmaterial in mehreren Lagen aufträgt, wobei man das Beschichtungsmaterial in einem ersten Auftragschritt als Grundierung ohne Zusatz von keramischen Mikropartikeln aufträgt und wobei man zumindest in einem abschließenden Auftragschritt das Beschichtungsmaterial unter Zusatz keramischer Mikropartikel aufträgt.

3. Verfahren nach Anspruch 2, **dadurch gekennzeichnet, daß** man nach dem ersten Auftragschritt das aufgetragene Beschichtungsmaterial trocknet und anschließend in einem zweiten Auftragschritt das Beschichtungsmaterial als weitere Grundierung ohne Zusatz von keramischen Mikropartikeln aufträgt und erneut trocknet.

4. Verfahren nach Anspruch 2 oder 3, **dadurch gekennzeichnet, daß** man das Holzformteil nach dem ersten Auftragschritt anschleift.

5. Verfahren nach einem der voranstehenden Ansprüche, **dadurch gekennzeichnet, daß** man das aufgetragene Beschichtungsmaterial unter Sauerstoffzufuhr, insbesondere Luftzufuhr, trocknet.

6. Verfahren nach einem der voranstehenden Ansprüche, **dadurch gekennzeichnet, daß** das Beschichtungsmaterial leinöl- und/oder sojaölmodifizierte Harze umfaßt.

7. Verfahren nach einem der voranstehenden Ansprüche, **dadurch gekennzeichnet, daß** das Beschichtungsmaterial Leinöl und/oder Sojaöl umfaßt.

8. Verfahren nach einem der voranstehenden Ansprüche, **dadurch gekennzeichnet, daß** das Beschichtungsmaterial als Verdünnungsmittel flüchtige aliphatische Kohlenwasserstoffe umfaßt.

9. Verfahren nach einem der voranstehenden Ansprüche, **dadurch gekennzeichnet, daß** das Beschichtungsmaterial ein Trocknungsmittel umfaßt.

10. Verfahren nach Anspruch 9, **dadurch gekennzeichnet, daß** das Trocknungsmittel Zirkonium- und/oder Kobaltverbindungen aufweist.

11. Verfahren nach Anspruch 9 oder 10, **dadurch gekennzeichnet, daß** das Trocknungsmittel bleifrei ist.

12. Verfahren nach einem der voranstehenden Ansprüche, **dadurch gekennzeichnet, daß** die keramischen Mikropartikel in Pulverform zugesetzt werden.

13. Verfahren nach Anspruch 12, **dadurch gekennzeichnet, daß** als keramische Mikropartikel Porzellanpulver oder porzellanähnliche Pulver zugesetzt werden.

14. Verfahren nach einem der voranstehenden Ansprüche, **dadurch gekennzeichnet, daß** man das Beschichtungsmaterial in einer Gesamtmenge von maximal etwa 150 g/m² aufträgt.

15. Verfahren nach einem der Ansprüche 2 bis 14, **dadurch gekennzeichnet, daß** man im ersten Auftragschritt das Beschichtungsmaterial in einer Menge von etwa 20 g/m² bis etwa 40 g/m², vorzugsweise 25 g/m² bis 35 g/m² aufträgt.

16. Verfahren nach einem der Ansprüche 2 bis 15, **dadurch gekennzeichnet, daß** man im abschließenden Auftragschritt das Beschichtungsmaterial mit zugesetzten keramischen Mikropartikeln in einer Gesamtmenge von maximal ca. 20 g/m², vorzugsweise etwa 10 g/m² bis ca. 15 g/m² aufträgt.

17. Verfahren nach einem der Ansprüche 3 bis 16, **dadurch gekennzeichnet, daß** man das Beschichtungsmaterial im zweiten Auftragschritt in einer Menge von ca. 15 g/m² bis etwa 35 g/m², vorzugsweise etwa 20 g/m² bis ungefähr 30 g/m² aufträgt.

18. Verfahren nach einem der voranstehenden Ansprüche, **dadurch gekennzeichnet, daß** man das Beschichtungsmaterial zumindest in einem Auftragschritt auf das Holzformteil aufspritzt.

19. Verfahren nach einem der voranstehenden Ansprüche, **dadurch gekennzeichnet, daß** man das Beschichtungsmaterial zumindest in einem Auftragschritt mittels einer Walze oder einer Bürste auf das Holzformteil aufträgt.

20. Verfahren nach einem der Ansprüche 2 bis 19, **dadurch gekennzeichnet, daß** man das Beschichtungsmaterial im ersten Auftragschritt mittels einer Walze oder Bürste aufträgt und in den nachfolgenden Auftragschritten auf das Holzformteil aufspritzt.

21. Innenausbauteil für Fahrzeuge mit einem sichtseitig beschichteten Holzformteil, insbesondere hergestellt nach dem Verfahren gemäß einem der voranstehenden Ansprüche, **dadurch gekennzeichnet, daß** auf das Holzformteil ein Beschichtungsmaterial auf Basis von pflanzenölmodifizierten Harzen und natürlichen pflanzlichen Ölen aufgetragen ist, wobei dem Beschichtungsmaterial keramische Mikropartikel zugesetzt sind.

22. Innenausbauteil nach Anspruch 21, **dadurch gekennzeichnet, daß** die keramischen Mikropartikel als Porzellanpulver oder porzellanähnliches Pulver dem Beschichtungsmaterial zugesetzt sind.
